# EUROPEAN PATENT APPLICATION

(11) **EP 2 228 758 A1**
(43) Date of publication of application: **15.09.2010**
(21) Application number: 09155093.9
(22) Date of filing: 13.03.2009
(51) Int. Cl.: G06Q 10/00

(54) **Method and computing device for processing a calendar database stored at a memory device**

(71) Applicant: RESEARCH IN MOTION LIMITED, Waterloo, Ontario N2L 3W8 (CA)
(72) Inventor: Wood, Todd, Waterloo Ontario N2L 3W8 (CA); Griffin, Jason T., Waterloo Ontario N2L 3W8 (CA); Perez, Carlos, St George Ontario N0E 1N0 (CA); Vuong, Thanh Vinh, Waterloo Ontario N2L 3L3 (CA)
(74) Representative: MERH-IP Matias Erny Reichl Hoffmann

(57) **Abstract**

A method and computing device for processing a calendar database stored at a memory device is provided. New calendar data is created comprising at least a date upon which a event is to occur. The new calendar data is stored in association with countdown reminder flag data in the calendar database. The calendar database is processed to produce countdown reminder view data comprising the new calendar data and countdown reminder data determined by processing the new calendar data and a current date. The countdown reminder view data is enabled to control a display device to produce a countdown reminder view comprising the new calendar data and the countdown reminder data, the countdown reminder view being one of a plurality of calendar views that can be produced from the calendar database. The display device is controlling via the countdown reminder view data to produce the countdown reminder view.

## Description

The specification relates generally to databases, and specifically to a method and computing device for processing a calendar database stored at a memory device.

In creating reminder data in calendar databases, an entry must be created that is associated with a future date and/or time and reminder data must be associated with such entries. The entry generally appears in a calendar view of the calendar database, when the calendar database is processed. Reminders are generally limited to occurring at pre-determined fixed timeframes prior to the future date (such as 1 day before, 1 hour before, 15 minutes before, etc.). This is often insufficient, as reminders are generally provided for short term future events, but events which occur further in the future are not provided unless the pre-determined fixed timeframe of the reminder is relatively large. Awareness of the longer term future events may thus not occur, unless the reminders are carefully managed. For example, once a reminder is provided, a new reminder must be created for the same entry, etc. While countdown reminders are useful (i.e. reminders which provide a timed countdown to an event), these have generally been provided in special standalone applications that are generally inconvenient and require additional processing and overhead in a computing device, especially if the computing device is simultaneously processing a calendar application. Furthermore, in such standalone applications, calendar data must be stored twice: once in a countdown reminder database and once in a calendar database. This is generally wasteful of resources in a computing device.

### GENERAL

A first aspect of the present specification may provide a method for processing a calendar database stored at a memory device. The method can comprise creating new calendar data comprising at least a date upon which an event is to occur. The method can further comprise storing the new calendar data in association with countdown reminder flag data in the calendar database. The method can further comprise processing the calendar database to produce countdown reminder view data comprising the new calendar data and countdown reminder data determined by processing the new calendar data and a current date, the countdown reminder view data enabled to control a display device to produce a countdown reminder view comprising the new calendar data and the countdown reminder data, the countdown reminder view being one of a plurality of calendar views that can be produced from the calendar database. The method can further comprise controlling the display device via the countdown reminder view data to produce the countdown reminder view.

The countdown reminder view data can further comprise a plurality of existing calendar data stored in the calendar database, each existing calendar data associated with respective existing countdown reminder flag data, the countdown reminder view data further comprising respective existing countdown reminder data for each of the plurality of existing calendar data. The countdown reminder view data can exclude existing calendar data not associated with a respective existing countdown reminder flag. Each existing calendar data can comprise at least a respective date upon which a respective planned event is to occur, each respective date being one of prior to a current date and after the current date. The new calendar data and the plurality of existing calendar data can be ordered in the countdown reminder view data according to respective description data associated with each of the new calendar data and the plurality of existing calendar data. The calendar database can be searchable via search data, and the new calendar data and the plurality of existing calendar data can be ordered in the countdown reminder view data according to the search data. The method can further comprise receiving the search data and responsively producing the countdown reminder view data.

The countdown reminder view data can comprise graphical representation data enabled to control the display device to display a respective graphical representation of each of the countdown reminder data and the existing countdown reminder data.

A subset of the new calendar data and the plurality of existing calendar data may be linked and the method can further comprise processing the calendar database to produce timeline reminder view data comprising the subset ordered according to a difference in time between a current time and a respective date of each set of calendar data in the subset. The timeline reminder view can further comprise a graphical timeline representation of the subset. The countdown reminder data and the existing countdown reminder data in the subset comprise a plurality of discrete countdown reminder data each one of said plurality of discrete countdown reminder data enabled to cause the display device to be controlled to produce the countdown reminder view data on at least one of a respective date and a respective time associated with the one of said plurality of discrete countdown reminder data.

The countdown reminder view data can comprise graphical representation data enabled to control the display device to display a graphical representation of the countdown reminder data.

Processing the new calendar data to produce the countdown reminder data can comprise determining a difference in time between at least one of the current date and a current time, and the date, and a level of precision of the countdown reminder data is based on the difference, the level of precision becoming higher as the difference becomes smaller.

A second aspect of the present specification may provide a computing device for processing a calendar database. The computing device can comprise a memory device for storing the calendar database. The computing device can further comprise an input device for receiving input data. The computing device can further comprise a display device for producing a plurality of calendar views. The computing device can further comprise a processing unit in communication with the memory device, the input device and the display device. The processing unit may be enabled to create new calendar data comprising at least a date upon which an event is to occur. The processing unit may be further enabled to store the new calendar data in association with countdown reminder flag data in the calendar database. The processing unit may be further enabled to process the calendar database to produce countdown reminder view data comprising the new calendar data and countdown reminder data determined by processing the new calendar data and a current date, the countdown reminder view data enabled to control the display device to produce a countdown reminder view comprising the new calendar data and the countdown reminder data, the countdown reminder view being one of the plurality of calendar views that can be produced from the calendar database. The processing unit may be further enabled to control the display device via the countdown reminder view data to produce the countdown reminder view.

The countdown reminder view data can further comprise a plurality of existing calendar data stored in the calendar database, each existing calendar data associated with respective existing countdown reminder fla g data, the countdown reminder view data can further comprise respective existing countdown reminder data for each of the plurality of existing calendar data. The countdown reminder view data can exclude existing calendar data not associated with a respective existing countdown reminder flag. Each the existing calendar data can comprise at least a respective date upon which a planned event is to occur, each respective date being one of prior to a current date and after the current date. The new calendar data and the plurality of existing calendar data can be ordered in the countdown reminder view data according to respective description data associated with each of the new calendar data and the plurality of existing calendar data. The calendar database can be searchable via search data, and the new calendar data and the plurality of existing calendar data can be ordered in the countdown reminder view data according to the search data. The input data can comprise the search data and the processing unit can be further enabled to produce the countdown reminder view data in response to receiving the search data.

The countdown reminder view data can comprise graphical representation data enabled to control the display device to display respective graphical representation of each of the countdown reminder data and the existing countdown reminder data.

A subset of the new calendar data and the plurality of existing calendar data can be linked and the processing unit can be further enabled to process the calendar database to produce timeline reminder view data comprising the subset ordered according to a difference in time between a current time and a respective date of each set of calendar data in the subset. The timeline reminder view can further comprise a graphical timeline representation of the subset. The countdown reminder data and the existing countdown reminder data in the subset can comprise a plurality of discrete countdown reminder data each enabled to cause the display device to be controlled to produce the countdown reminder view data on at least one of a respective date and a respective time associated with each the discrete countdown reminder data.

The countdown reminder view data can comprise graphical representation data enabled to control the display device to display a graphical representation of the countdown reminder data.

To process the new calendar data to produce the countdown reminder data, the processing unit can be further enabled to determine a difference in time between at least one of the current date and a current time, and the date, and a level of precision of the countdown reminder data can be based on the difference, the level of precision becoming higher as the difference becomes smaller.

### BRIEF DESCRIPTIONS OF THE DRAWINGS

Embodiments are described with reference to the following figures, in which:

Figure 1 depicts a computing device for processing a calendar database, according to non-limiting embodiments;

Figure 2 depicts a daily view of a calendar database produced by a display device at the computing device of Figure 1, according to non-limiting embodiments;

Figure 3 depicts a monthly view of a calendar database produced by a display device, according to non-limiting embodiments;

Figure 4 depicts an event view 400 produced by a display device, according to non-limiting embodiments;

Figure 5 depicts a method for processing a calendar database, according to non-limiting embodiments;

Figure 6 depicts the computing device of Figure 1 producing countdown reminder view data for controlling a display device, according to non-limiting embodiments;

Figures 7 and 8 depict countdown reminder views produced by a display device, according to non-limiting embodiments;

Figure 9 depicts a method for determining a level of precision of countdown reminder data, according to non-limiting embodiments; and

Figures 10 through 17 depict countdown reminder views produced by a display device, according to non-limiting embodiments.

### DESCRIPTION OF PREFERRED EMBODIMENTS

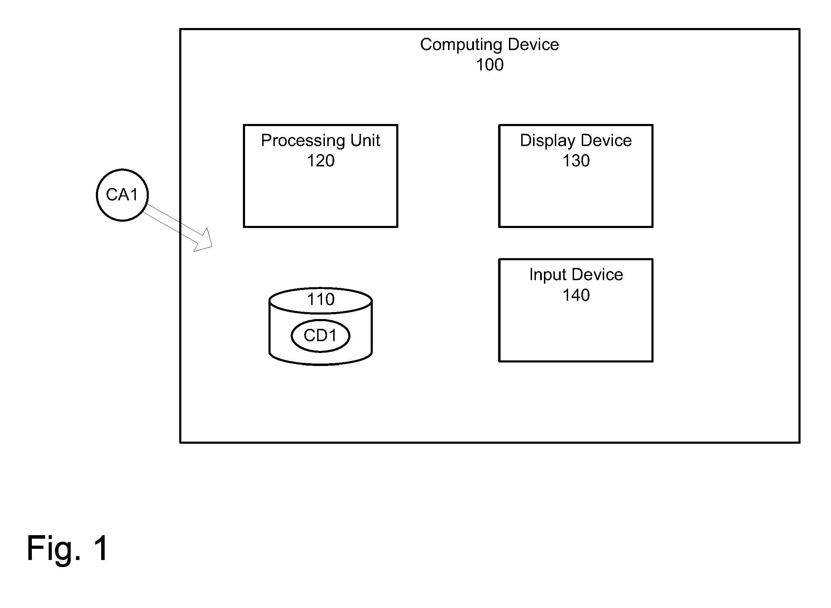

Figure 1 depicts a computing device 100 for processing a calendar database CD1 stored at a memory device 120. In present exemplary embodiments, the computing device 100 comprises the memory device 110, however it is understood that in other embodiments, computing device 100 can access an external computing device upon which calendar database CD1 (or another calendar database) can be stored. The computing device further comprises a processing unit 120 for processing data stored at the memory device 110. The computing device 100 further comprises a display device 130 for displaying data and an input device 140 for receiving input data. Processing unit 120 is in communication with memory device 110, display device 130 and the input device 140, for example via a computer bus. Furthermore, it is understood that in other embodiments display device 130 and/or input device 140 can be external to computing device 100.

Computing device 100 can include, but is not limited to, any suitable combination of a personal computer, a laptop computer, a mobile computing device, a mobile communication device, a PDA, a mobile phone, and the like. Memory 110 can include any suitable combination of random access memory (RAM) and read only memory (ROM), and the like, for storing calendar database CD1. Processing unit 120 can include any suitable processor (e.g. a central processing unit (CPU)). Display device 130 can comprise any suitable combination of display device, for example a CRT and/or a flat panel display (e.g. LCD, plasma, OLED and the like. The input device 145 can comprise any suitable combination of keyboard, pointing device, trackball, touch screen, input buttons, and the like.

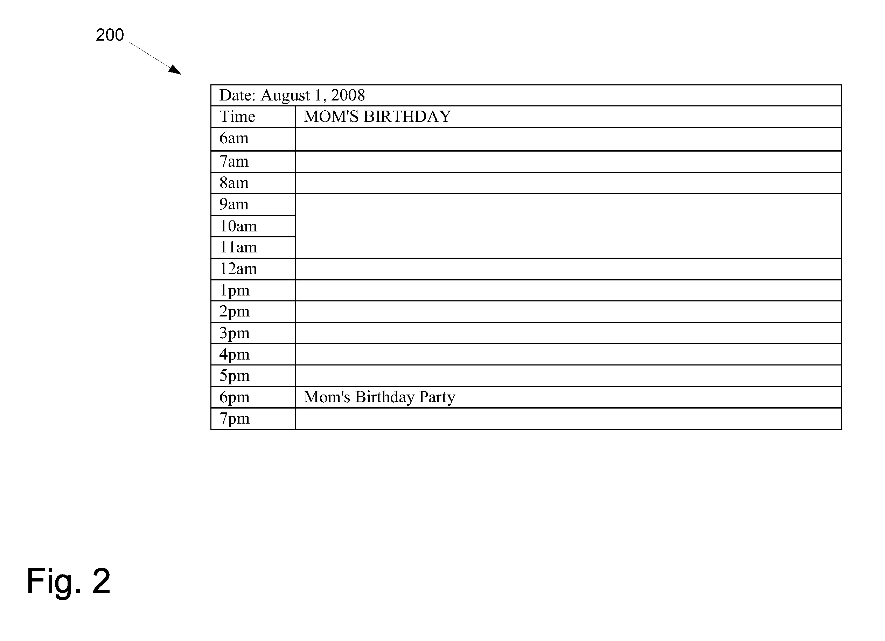

Computing device 100 further comprises a calendar application CA1 that can be stored in memory device 110 and processed by processing unit 120. Upon processing calendar application CA1, processing unit 120 can further process calendar database CD1 and control display device 130 to produce one of a plurality of calendar views that can be produced from calendar database CD1. For example display device 130 can be controlled to produce a view of events stored in calendar database CD1 by the day, week, month etc. For example, Figure 2 depicts a non-limiting embodiment of a view of calendar database CD1 comprising a daily view 200 of a given date (e.g. August 6, 2008), which comprises entries "MOM'S BIRTHDAY", which is not associated with a given time, and "Mom's Birthday Party", which is associated with a time of 6pm.

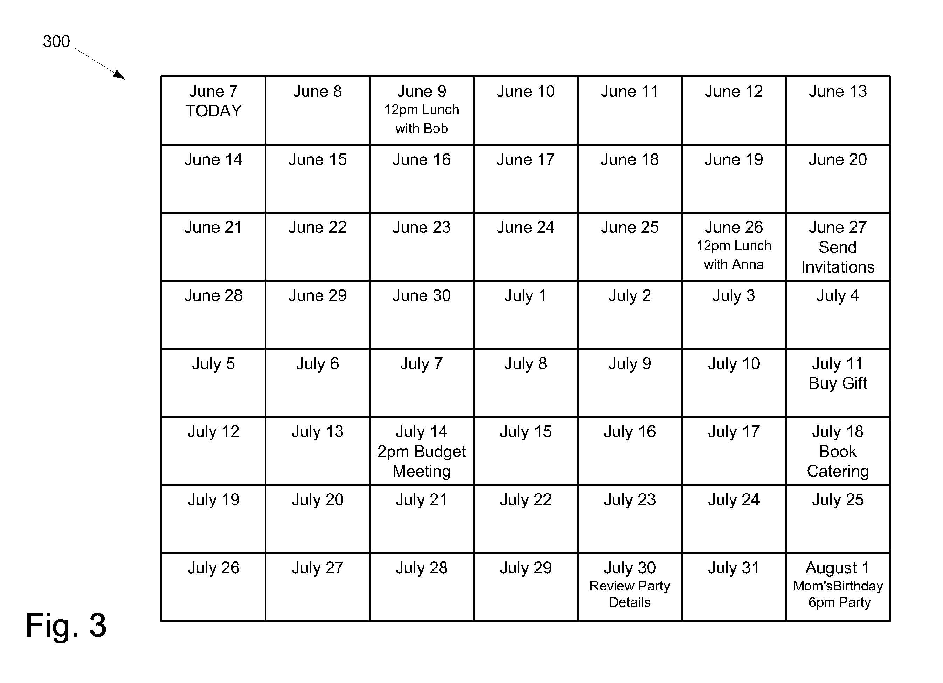

Furthermore, Figure 3 depicts a non-limiting embodiment of a view of calendar database CD1 comprising a month view 300 of a given time period (e.g. June 7 through August 1, 2008), which comprises entries: "TODAY" on June 7 (assuming that a present date is June 7); "Meet Bob for Lunch" on June 19 at 12pm; "Send Invitations" on June 27, "Meet Anna for Lunch" on June 19 at 12pm; "Buy Gift" on July 11; "Budget Meeting" on July 14 at 2pm; "Book Catering" on July 18; "Review Party Details" on July 30; "Mom's Birthday" on August 1; and "Party" on August 1 at 6pm.

In some embodiments, calendar database CD1 can comprise a table of events stored in calendar database CD1, for example as in Table 1:

**Table 1: Non-limiting Example of Calendar Database CD1**

| Entry | Comment | Key Words | Date | Time | Countdown Reminder Flag |
|---|---|---|---|---|---|
| Lunch with Bob | | Work | June 9, 2008 | 12pm | F |
| Mom's Birthday | Send Invitations | Birthday, Family | June 20, 2008 | | F |
| Lunch with Bob | | | June 26, 2008 | 12pm | |
| Mom's Birthday: | Buy Gift | Birthday, Family | June 27, 2008 | | F |
| Mom's Birthday: | Book Catering | Birthday, Family | July 11,2008 | | F |
| Budget Meeting | | Work | July 14, 2008 | 2pm | F |
| Mom's Birthday: | Review Party Details | Birthday, Family | July 30, 2008 | | F |
| Mom's Birthday | | Birthday, Family | August 1, 2008 | | F |
| Mom's Birthday | Party | Birthday, Family | August 1, 2008 | 6pm | F |

While Table 1 is presented in rows and columns, it is understood that calendar database CD1 can be stored in any suitable format. Furthermore, Table 1 comprises 8 entries, similar to entries in month view 300 described above. However, six entries are linked under the same event "Mom's Birthday", and distinguished from one another via "Comment", with each linked entry pertaining to a different event (which can include a task)associated with one another. Furthermore, each entry is associated with at least a date. Some entries are further associated with a time. Some entries are further associated with at least one Keyword, such as "Birthday", "Family" and "Work". Some entries are further associated with a countdown reminder flag data ("Countdown Reminder Flag"). Countdown reminder flag data indicative that a countdown reminder is to be produced for an event, when processing calendar database CD1 to produce a countdown reminder view. For example each event with an "F" in the Countdown Reminder Flag column is understood to be associated with countdown reminder flag data. It is understood that Table 1, and hence calendar database CD1, can comprise any suitable number of columns and rows, and any suitable type of data. For example, Table 1 can further comprise event frequency data, and reminder frequency data.

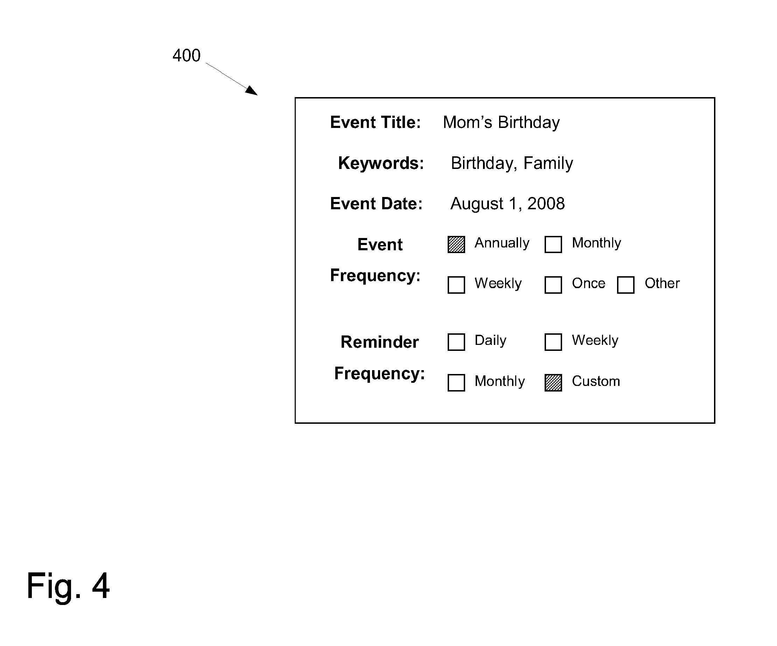

Calendar database CD1 can be populated via input device 140. For example, Figure 4 depicts a non-limiting embodiment of an event view 400 that can be produced by controlling display device 130. Responsive to producing event view 400, input data representative of event data can be received from input device 140 to populate the various fields of event view 400. For example, in non-limiting exemplary embodiments, a field "Event Title" has been populated with "Mom's Birthday, a field "Keywords" has been populated with "Birthday, Family", and a field "Event Date" has been populated with "August 1, 2008". In further embodiments, the "Event Date" field can further comprise a time. An "Event Frequency" field comprises a selection from a plurality of choices; in the exemplary non-limiting embodiment depicted in Figure 4, "Annually" has been selected. Similarly, a "Reminder Frequency" field comprises a selection from a plurality of choices; in the exemplary non-limiting embodiment depicted in Figure 4, "Custom" has been selected. In some embodiments, selection of "Custom" is indicative that a countdown reminder flag is to be stored in calendar database CD1, in association with the event, as in Table 1. However, in embodiments where one of options "Daily", "Weekly", and "Monthly" are chosen in the "Reminder Frequency" field, it is understood that reminders are respectively provided daily, weekly or monthly. In other embodiments, a reminder frequency is not selected indicative that no reminder is to be provided. In yet further embodiments, event view 400 can comprise a field that enables a reminder to be provided a given amount of time (e.g. 15 minutes, 30 minutes, 1 day, etc.) before a date and/or time in the "Event Day" field. It is also understood that the format of event view 400 is generally non-limiting and further that fields can be provided in any suitable format (e.g. pull down menus and the like).

It is further understood that each entry in calendar database CD1 is representative an event that is to occur, or has occurred, on a given date. It is yet further understood that each entry in calendar database CD1 can be associated with a current date (i.e. "TODAY"), a past date, or a future date. It is yet further understood that, in some embodiments, each entry in calendar database CD1 can be associated with a time. It is furthermore understood that each event can be understood to be a happening that is to occur on a given date and/or a given time, or a task that is to be performed on a given date and/or a given time.

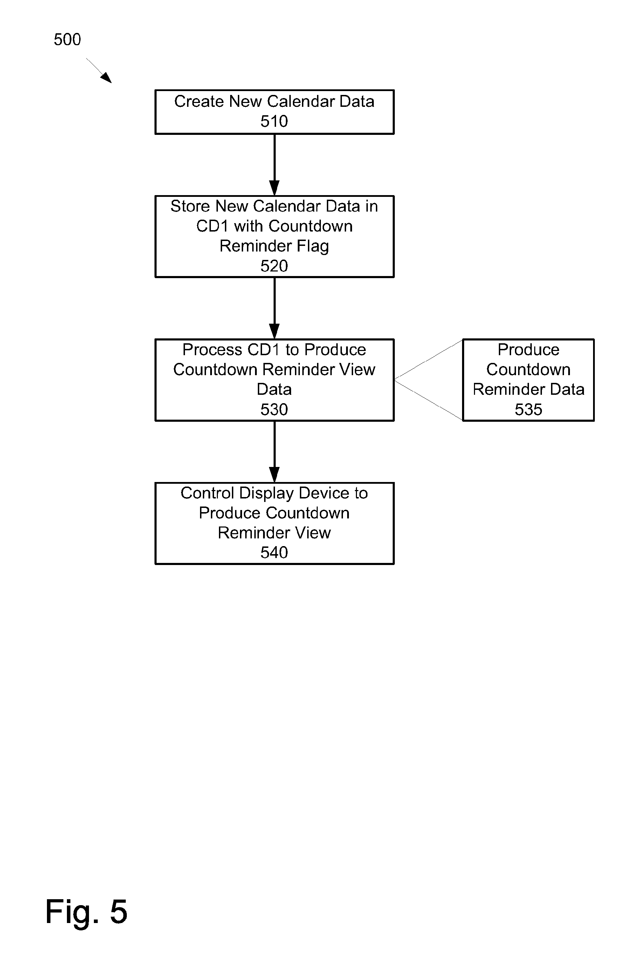

Attention is now directed to Figure 5 which depicts a method 500 for processing a calendar database stored at a memory device, such as calendar database CD1 stored at memory device 110. In order to assist in the explanation of the method 500, it will be assumed that the method 500 is performed using the computing device 100. Furthermore, the following discussion of the method 500 will lead to a further understanding of the computing device 100 and its various components. However, it is to be understood that the computing device 100 and/or the method 500 can be varied, and need not work exactly as discussed herein in conjunction with each other, and that such variations are within the scope of present embodiments.

At step 510 new calendar data is created, new calendar data comprising at least a date upon which an event is to occur. In some embodiments, new calendar data can further comprise a time upon which the event is to occur. In some of these embodiments, the event can conventionally be called a "task". For example, new calendar data can be created via event view 400, described above to create the entry "Mom's Birthday" on August 1, 2008 in Table 1.

At step 520, new calendar data is stored in association with countdown reminder flag data in calendar database CD1. For example, an entry in Table 1 can be created, as described above, and the countdown reminder flag field can comprise countdown reminder flag data. For example, the entry "Mom's Birthday" on August 1, 2008 in Table 1 is associated with countdown reminder flag data "F".

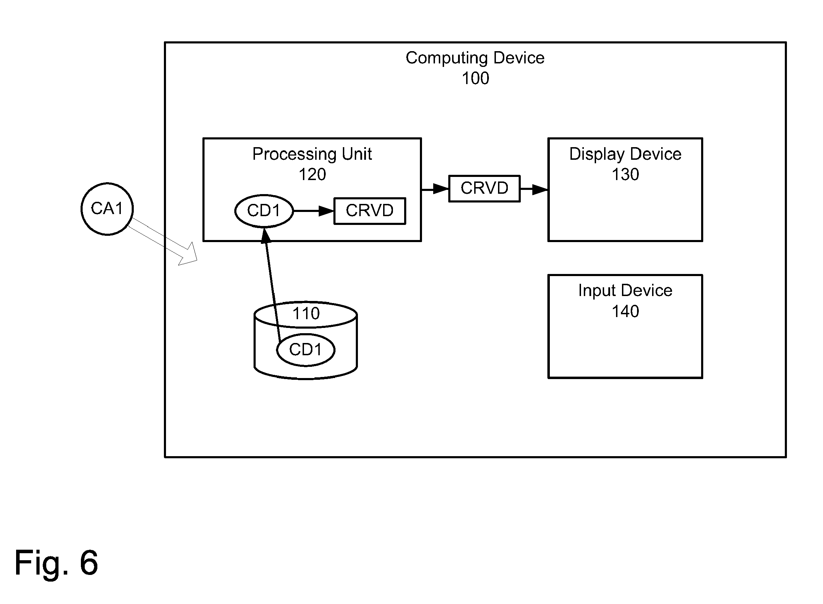

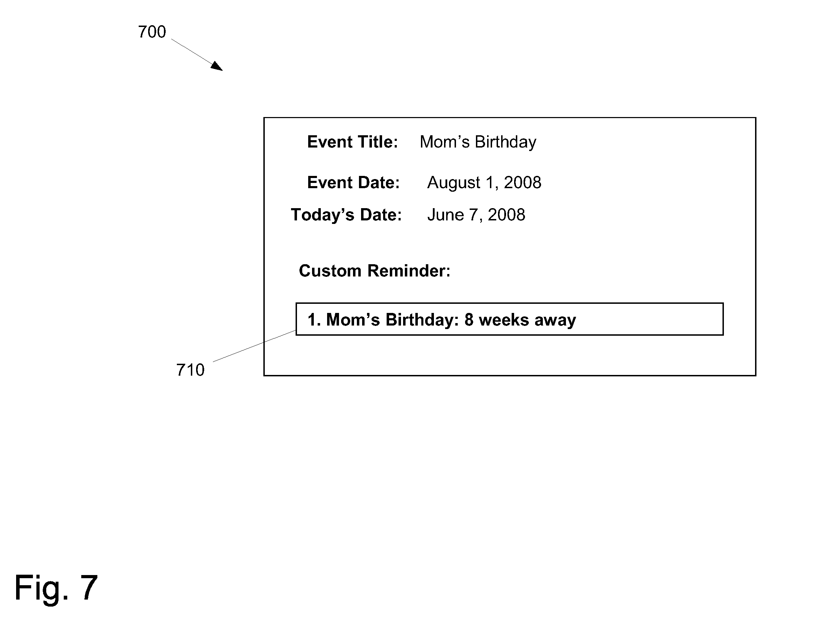

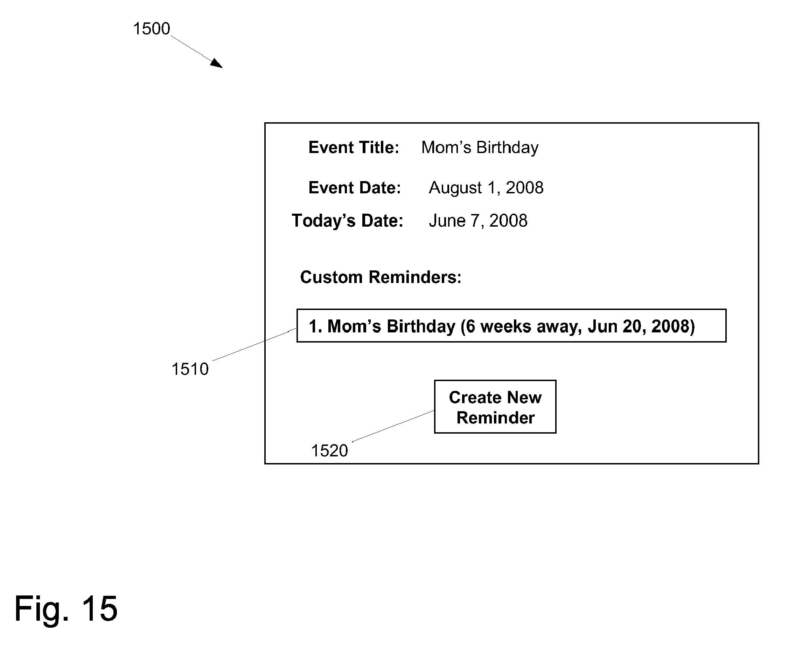

At step 530, calendar database CD1 is processed to produce countdown reminder view data CRVD. For example, as depicted in Figure 6 (substantially similar to Figure 1 with like elements having like numbers), calendar database CD1 can be retrieved at processing unit 120, and processed to produce countdown reminder view data CRVD. countdown reminder view data CRVD comprises the new calendar data and countdown reminder data determined by processing the new calendar data and a current date, for example at a sub-step 535 of step 530. Countdown reminder view data CRVD is enabled to control display device 130 to produce a countdown reminder view (e.g. see Figures 7, 8 and 10 through 17 described below) comprising new calendar data and countdown reminder data. A countdown reminder view is one of a plurality of calendar views that can be produced from the calendar database CD1, including but not limited to daily view 200 and month view 300.

At step 540, display device 130 is controlled via countdown reminder view data CRVD (e.g. see Figure 6) to produce a countdown reminder view. Figure 7 depicts a non-limiting example of a countdown reminder view 700. In these embodiments, the countdown reminder review comprises an Event Title ("Mom's Birthday"), an Event Date ("August 1, 2008"), a current date (i.e. "Today's Date June 7, 2008") and count down reminder data 710 ("Custom Reminder"), "Mom's Birthday: 8 Weeks Away".

As the current date gets closer to the date of the event, countdown reminder data 710 is updated to reflect the difference in time between the current date and the date of the event. For example, 8 weeks changes to 7 weeks, then to 6 weeks etc. It is understood that the level of precision of countdown reminder data 710 is generally non-limiting, and in some embodiments countdown reminder data 710 can include the number of weeks, days, minutes and/or seconds until the date of the event (e.g. "Mom's Birthday: 8 Weeks, 1 Day, 5 minutes, 4 seconds away").

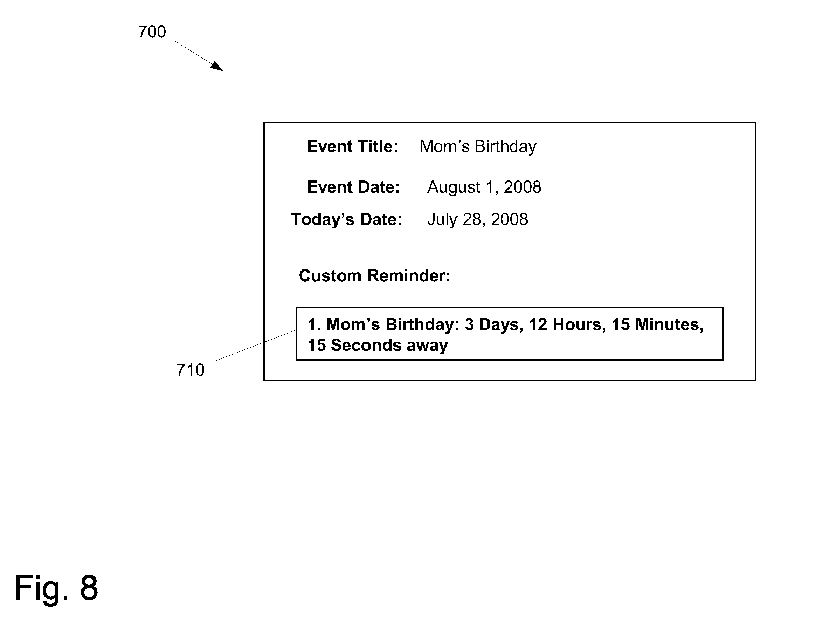

In some embodiments, a level of precision of countdown reminder data 710 is based on the difference between the current date and the date of the event, the level of precision becoming higher as the difference becomes smaller. For example, when the difference is above as threshold value (e.g. more than 1 week), determination of the number of days, minutes and/or seconds can be a waste of resources of computing device 100, such as processing time at processing unit 120. In other words, above a threshold value, a high level of precision in countdown reminder data 710 is generally not desirable. However, as the difference becomes smaller, a high level of precision is desirable as planning for the event becomes more critical. Hence, as depicted in Figure 8, countdown reminder view 700 is updated closer to the date of the event with countdown reminder data 710 having a higher precision than in Figure 7. Furthermore, it is understood that a plurality of threshold values can be used to determine the level of precision of the countdown reminder data 710. For example, if the difference is greater than 1 week, countdown reminder data 710 can have a precision of weeks. If the difference is between 1 week and 1 day, countdown reminder data 710 can have a precision of days. If the difference is less than 1 day, countdown reminder data 710 can have a precision of minutes and seconds.

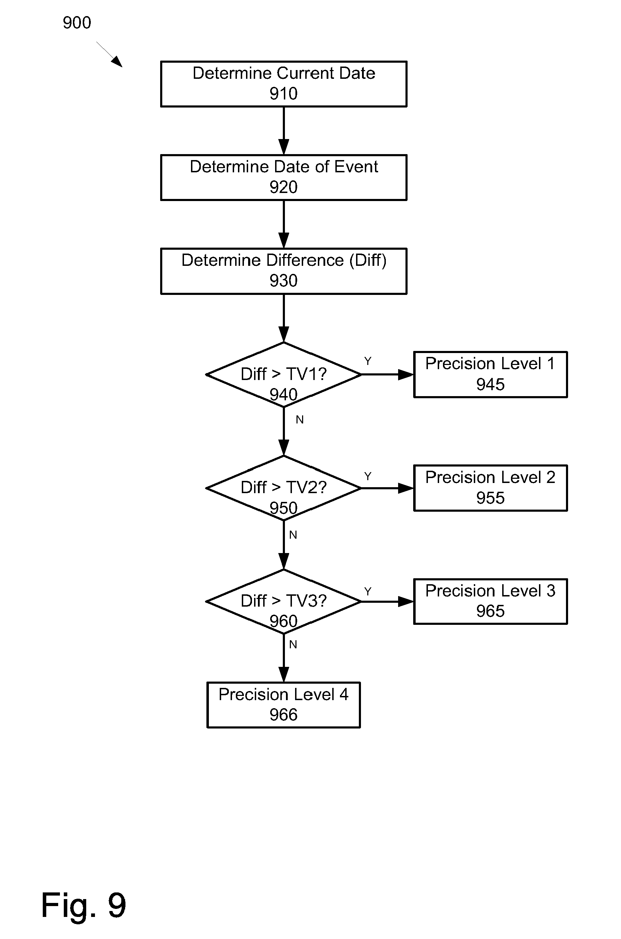

Indeed, Figure 9 depicts a method 900 for determining the level of precision of countdown reminder data 710. At step 910 a current date is determined. For example, computing device 100 can be enabled to track the current date and time, e.g. within calendar application CA1. At step 920, a date of a event is determined, for example by processing an entry in calendar database CD1. It is understood that in some embodiments the time of the event it also determined. At step 930, a difference in time is determined between the current date (and/or time) and the date (and/or time) of the event. At steps 940, 950, and 960, the difference is compared to at least one threshold value (TV1, TV2, TV3, where TV1>TV2>TV3) to determine the level of precision of the countdown reminder data 710. For example, at step 940 it is determined if the countdown reminder data is greater than a first threshold value TV1 (e.g. 2 weeks). If so, a first precision level is used (step 945), for example "weeks". If not, however, it is determined at step 950 if the difference is greater than a second threshold value TV2 (e.g. 1 week). If so, a second precision level is used (step 955), for example "weeks and days". If not, however, it is determined at step 960 if the difference is greater than a second threshold value TV2 (e.g. 3 days). If so, a third precision level is used (step 965), for example "days". If not, a fourth precision level is used (step 966), for example "days, minutes, seconds". It is understood that any suitable number of threshold values and precision levels can be used.

In alternative embodiments, countdown reminder view data CRVD further comprises a plurality of existing calendar data stored in the calendar database CD1 each comprising at least a respective date upon which a respective event to occur, and each associated with respective existing countdown reminder flag data. For example, embodiments of countdown reminder view data CRVD comprises entries in Table 1 associated with countdown reminder flag data. The countdown reminder view data CRVD further comprises respective existing countdown reminder data for each of the plurality of existing calendar data.

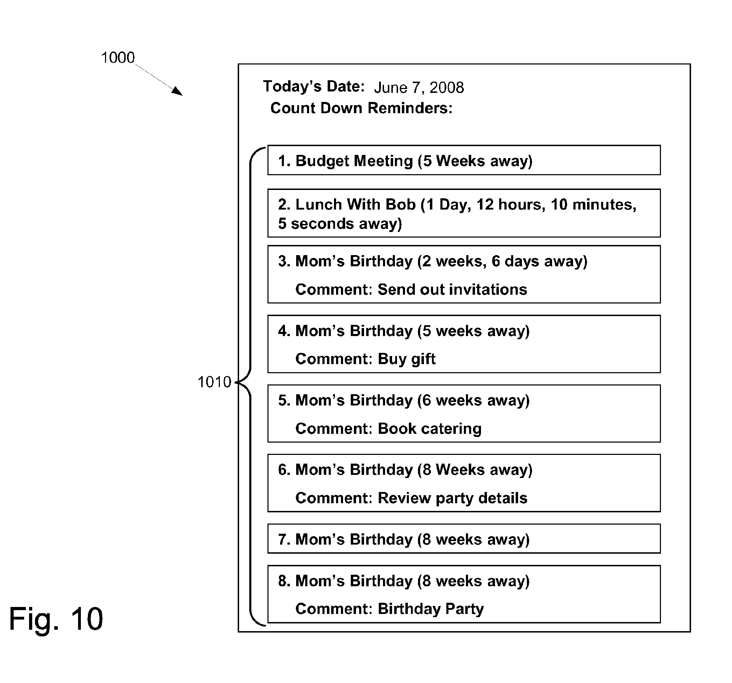

For example, attention is directed to Figure 10 which depicts non-limiting embodiments of a countdown reminder view 1000 comprising a plurality of existing calendar data with associated countdown reminder data 1010, including a countdown reminder (No. 6) similar to countdown reminder data 710 of Figure 7 associated with new calendar data (e.g. "Mom's Birthday"). Countdown reminder view data 1000 excludes existing calendar data not associated with a respective existing countdown reminder flag. For example, "Lunch with Anna" in Table 1 is excluded from countdown reminder view 1000. Furthermore, the existing calendar data comprises at least a respective date upon which a planned event is to occur, each respective date being one of prior to a current date and after the current date.

New calendar data and the plurality of existing calendar data can be ordered in countdown reminder view data CRVD, as represented by view 1000, according to respective description data associated with each of new calendar data and the plurality of existing calendar data. For example, "Budget Meeting and "Lunch with Bob" appear prior to the those events associated with "Mom's Birthday"; in other words, in these embodiments, new calendar data and the plurality of existing calendar data are ordered in countdown reminder view data CRVD, as represent by view 1000, according to respective description data in alphabetical order.

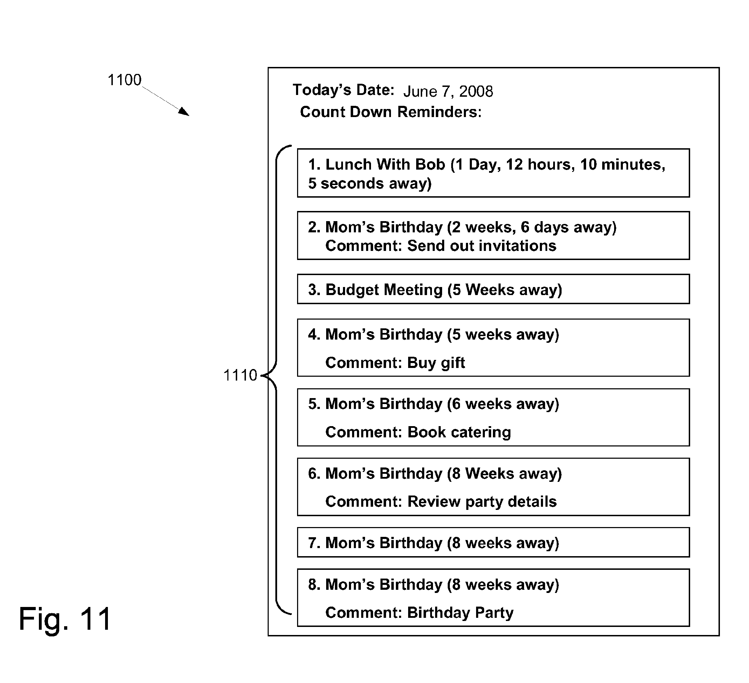

In alternative embodiments, as depicted in the view 1100 of Figure 11, new calendar data and the plurality of existing calendar data can be ordered in countdown reminder view data CRVD according to a difference in time between a current date and a respective date of an event associated with each of the countdown reminders 1110.

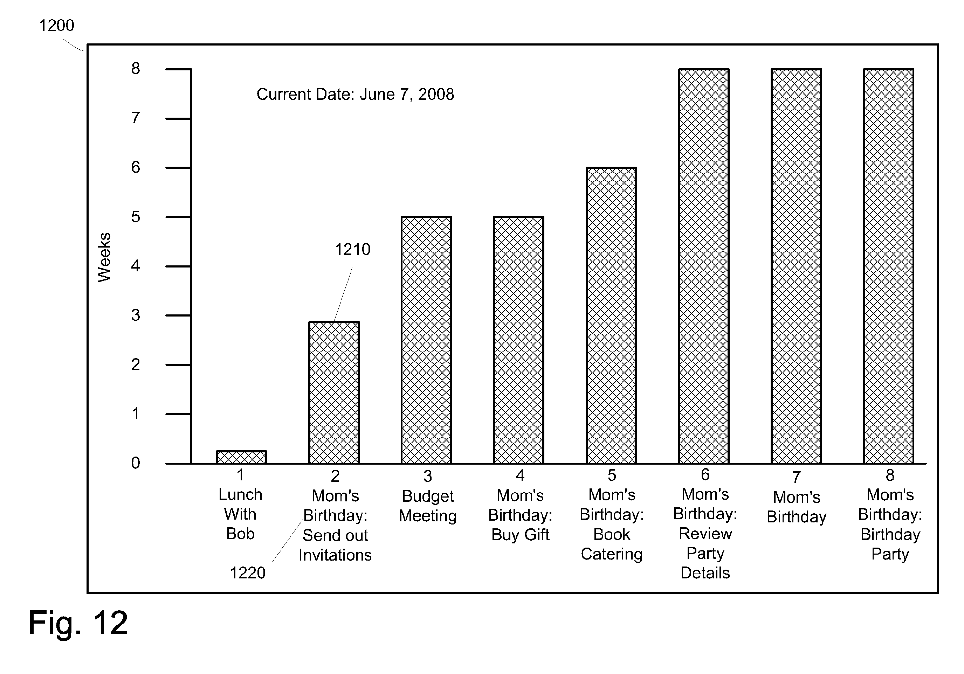

In yet further alternative embodiments, as depicted in Figure 12, countdown reminder view CRVD, as represented by view 1200, can comprise graphical representation data enabled to control the display device 130 to display a plurality of graphical representations 1210 of each the countdown reminder data 1220 associated with entries in the calendar database CD1. For clarity, in Figure 12, only one graphical representation 1210 is labelled, along with respective countdown reminder data 1220, though each respective countdown reminder data 1220 corresponds to countdown reminder data 1110 in Figure 11. In any event, the relative size of each graphical representation 1210 to one another is indicative of the relative time remaining until the event associated with respective countdown reminder data 1220. In some embodiments, countdown reminder view data CRVD, as represented by view 1200, can include an absolute scale (as depicted: "Weeks"), while in other embodiments a scale is absent in countdown reminder view CRVD, such that graphical representations 1210 in alternatives to view 1200 are understood as relative timers.

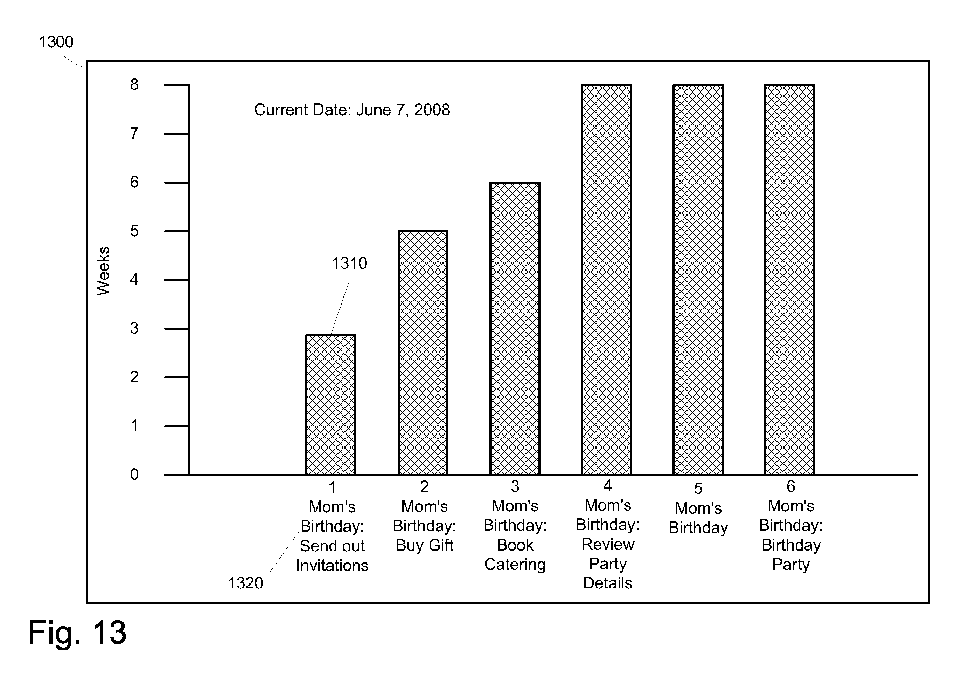

Such a graphical representation can be desirable in organizing calendar data associated with specific events. For example, calendar database CD1 can be searchable via search data received via input device 140, and new calendar data and/or existing calendar data can ordered in countdown reminder view data CRVD according to the received search data. For example, search data can comprise "Mom's Birthday" and entries in calendar database CD 1 corresponding to "Mom's Birthday" can be displayed in either a view 1300, as depicted in Figure 13, similar to the view 1200, however comprising only graphical representations 1310 and countdown timer data 1320 associated with "Mom's Birthday" in calendar database CD1.

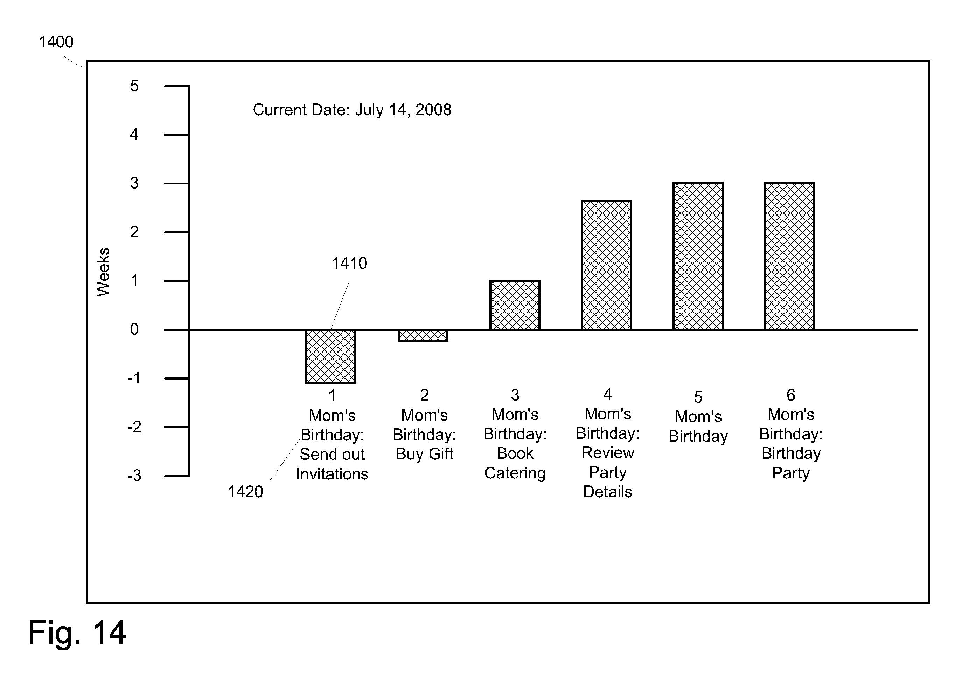

Furthermore, as the difference between the current date and the time to the event "Mom's Birthday" decreases, graphical representations 1310 can be adjusted to reflect the changing difference. Furthermore, as depicted in Figure 14, if the current date is July 12, 2008, some of the events associated with Mom's Birthday are in the past and some are in the future in a new view 1400, similar to view 1300. Graphical representations 1410 can be generated to reflect this, as depicted, for respective countdown timer data 1420. It is understood that negative values for "weeks" represent time that is prior to the current date ("July 14, 2008").

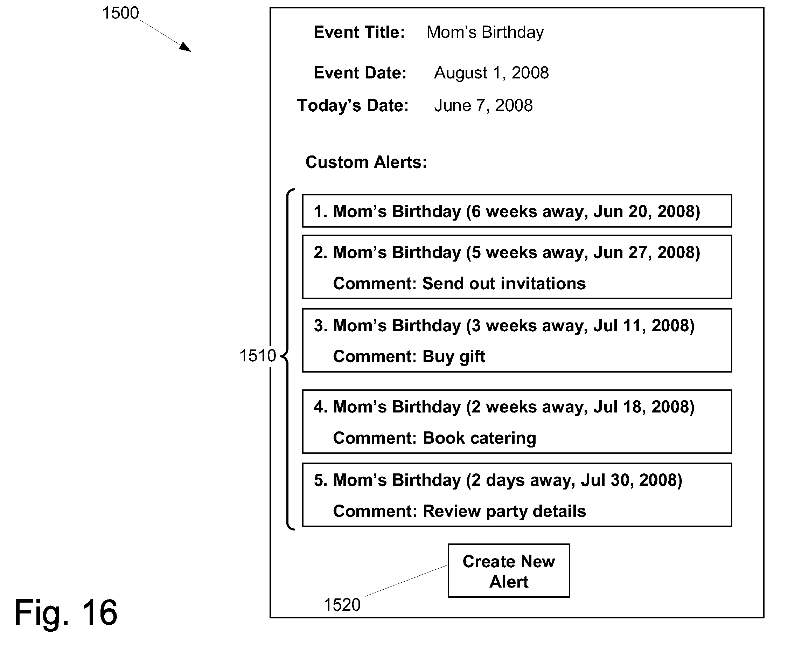

Attention is now directed to an alternative countdown reminder view 1500 comprising at least one discrete reminder 1510, associated with a event occurring at a future date (i.e. "Mom's Birthday" occurring on August 1, 2008.). A button 1520 can be actuated by receipt of input data from input device 140 to add additional reminders 1510, as depicted in Figure 16. The plurality of discrete reminders 1510 represent countdown reminder data for a given entry stored in calendar database CD1, the countdown reminder data hence being adapted to provide a plurality of discrete reminders at dates (and/or times) associated with each discrete reminder 1510. Countdown reminder data 1510 can then be stored in calendar database CD1 in any suitable format. Hence, processing unit 120 can subsequently generate calendar reminder view data CRVD when a current date (and/or time) is equal to a date (and/or time) associated with each respective discrete reminder 1510, calendar reminder view data CRVD comprising data associated with the respective discrete reminder 1510 (e.g. "Mom's birthday is 5 weeks away: Send out Invitations") and display device 130 can be subsequently controlled to produce a count down reminder view using calendar reminder view data CRVD.

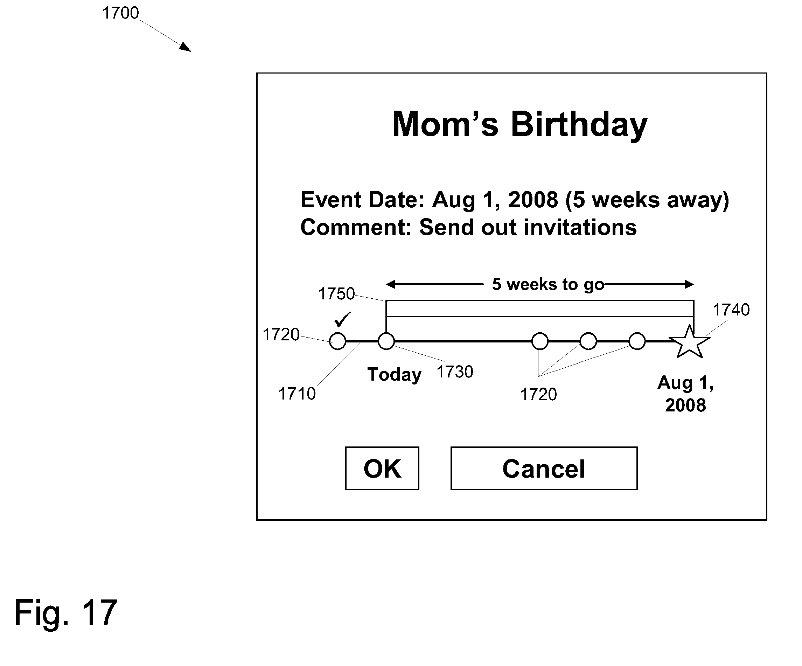

Alternatively, processing unit 120 can generate calendar reminder view data CRVD to control display device 130 to produce a countdown reminder view 1700, as depicted in Figure 17, calendar reminder view data CRVD comprising timeline reminder view data, the timeline reminder view data comprising a subset of calendar database CD1 ordered according to a difference in time between a present date (and/or time) and a respective date of each set of calendar data in the subset. For example, one such subset comprises entries in associated with "Mom's Birthday" (as in Figure 16), and countdown reminder view 1700 comprises a timeline 1710, with each discrete countdown reminder 1510 represented as a marker 1720 on timeline 1710, with the current date represented as a marker 1730, and the date of the event represented as a marker 1740. However, in some embodiments, not all discrete countdown reminders 1510 can be represented with markers; for example, the date of the event "Mom' Birthday" coincides with the date of "Birthday Party". Production of markers for each discrete reminder/event that coincide can generally be a waste of system resources at the computing device 100. The view 1700 further comprises an indication of an associated event ("Mom's Birthday") can further comprise indications of the date (and/or time) of the associated event (August 1, 2008), and a length of time remaining until the associated event in textual and/or graphical format: "5 weeks away" and bar 1750, respectively.

In any event, by providing various embodiments of countdown reminders integrated into calendar application CA1, system resources can be used more effectively by storing calendar data only once at computing device 100, in calendar database CD1. Furthermore, as a plurality of plurality of calendar views can be produced from calendar database CD1, including at least one countdown reminder view, mechanical stress at the input device 140 can be reduced as less input data is used to produce the at least one countdown reminder view than if count reminder views were produced from a separate database. The processing at the processing unit 120 can also be reduced (e.g. fewer CPU cycles) than if countdown reminder views were produced using a database separate from calendar database CD 1.

Those skilled in the art will appreciate that in some embodiments, the functionality of computing device 100 can be implemented using pre-programmed hardware or firmware elements (e.g., application specific integrated circuits (ASICs), electrically erasable programmable read-only memories (EEPROMs), etc.), or other related components. In other embodiments, the functionality of computing device 100 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for processing a calendar database (CD1) stored at a memory device (110), the method comprising:
creating new calendar data comprising at least a date upon which an event is to occur;
storing said new calendar data in association with countdown reminder flag data in said calendar database (CD1);
processing said calendar database (CD1) to produce countdown reminder view data (CRVD) comprising said new calendar data and countdown reminder data determined by processing said new calendar data and a current date, said countdown reminder view data (CRVD) enabled to control a display device (130) to produce a countdown reminder view comprising said new calendar data and said countdown reminder data, said countdown reminder view being one of a plurality of calendar views that can be produced from said calendar database (CD1); and
controlling said display device (130) via said countdown reminder view data (CRVD) to produce said countdown reminder view.

2. The method of claim 1, wherein said countdown reminder view data (CRVD) further comprises a plurality of existing calendar data stored in said calendar database (CD1), each existing calendar data associated with respective existing countdown reminder flag data, said countdown reminder view data (CRVD) further comprising respective existing countdown reminder data for each of said plurality of existing calendar data.

3. The method of claim 2, wherein said countdown reminder view data (CRVD) excludes existing calendar data not associated with a respective existing countdown reminder flag.

4. The method of claim 2 or 3, wherein each said existing calendar data comprises at least a respective date upon which a respective planned event is to occur, each said respective date being one of prior to a current date and after said current date.

5. The method of claim 2, 3 or 4, wherein said new calendar data and said plurality of existing calendar data are ordered in said countdown reminder view data (CRVD) according to respective description data associated with each of said new calendar data and said plurality of existing calendar data.

6. The method of any of claims 2 to 5, wherein said calendar database (CD1) is searchable via search data, and said new calendar data and said plurality of existing calendar data are ordered in said countdown reminder view data (CRVD) according to said search data.

7. The method of claim 6, further comprising receiving said search data and responsively producing said countdown reminder view data (CRVD).

8. The method of any of claims 2 to 7, wherein said countdown reminder view data (CRVD) comprises graphical representation data enabled to control said display device (130) to display a respective graphical representation of each said countdown reminder data and said existing countdown reminder data.

9. The method of any of claims 2 to 8, wherein a subset of said new calendar data and said plurality of existing calendar data are linked and said method further comprises processing said calendar database (CD1) to produce timeline reminder view data comprising said subset ordered according to a difference in time between a current time and a respective date of each set of calendar data in said subset.

10. The method of claim 9, wherein said timeline reminder view further comprises a graphical timeline representation of said subset.

11. The method of claim 9, wherein said countdown reminder data and said existing countdown reminder data in said subset comprise a plurality of discrete countdown reminder data, each one of said plurality of discrete countdown reminder data enabled to cause said display device (130) to be controlled to produce said countdown reminder view data (CRVD) on at least one of a respective date and a respective time associated with said one of said plurality of discrete countdown reminder data.

12. The method of any preceding claim, wherein said countdown reminder view data (CRVD) comprises graphical representation data enabled to control said display device (130) to display a graphical representation of said countdown reminder data.

13. The method of any preceding claim, wherein processing said new calendar data to produce said countdown reminder data comprises determining a difference in time between at least one of said current date and a current time, and said date, and a level of precision of said countdown reminder data is based on said difference, said level of precision becoming higher as said difference becomes smaller.

14. A computing device (100) for processing a calendar database (CD1), comprising:
a memory device (110) for storing said calendar database (CD1);
an input device (140) for receiving input data;
a display device (130) for producing a plurality of calendar views; and
a processing unit in communication with said memory device (110), said input device (140) and said display device (130), said processing unit enabled to implement said method of claims 1 to 13.

15. A computer readable storage medium containing programming instructions executable on a processor of a computing device having a memory storing a calendar database; said programming instructions causing said computing device to implement the steps of the method according to any one of claims 1 to 13.

## Amended claims

### Amended claims in accordance with Rule 137(2) EPC.

**1.** A method for processing a calendar database (CD1) stored at a memory device (110), the method comprising:
creating new calendar data comprising at least a date upon which an event is to occur;
storing said new calendar data in association with countdown reminder flag data in said calendar database (CD1);
processing said calendar database (CD1) to produce countdown reminder view data (CRVD) comprising said new calendar data and countdown reminder data determined by processing said new calendar data and a current date, said countdown reminder view data (CRVD) enabled to control a display device (130) to produce a countdown reminder view comprising said new calendar data and said countdown reminder data, said countdown reminder view being one of a plurality of calendar views that can be produced from said calendar database (CD1);
controlling said display device (130) via said countdown reminder view data (CRVD) to produce said countdown reminder view; and
as a difference between a current and a date of said event becomes smaller, updating said countdown reminder data at said display device (130) to reflect a difference in time between said current date and said date of said event,
wherein said countdown reminder view data (CRVD) further comprises a plurality of existing calendar data stored in said calendar database (CD1), each existing calendar data associated with respective existing countdown reminder flag data, said countdown reminder view data (CRVD) further comprising respective existing countdown reminder data for each of said plurality of existing calendar data, and
wherein a subset of said new calendar data and said plurality of existing calendar data are linked.

**2.** The method of claim 1, wherein said countdown reminder view data (CRVD) excludes existing calendar data not associated with a respective existing countdown reminder flag.

**3.** The method of claim 2, wherein each said existing calendar data comprises at least a respective date upon which a respective planned event is to occur, each said respective date being one of prior to a current date and after said current date.

**4.** The method of claim 2 or 3, wherein said new calendar data and said plurality of existing calendar data are ordered in said countdown reminder view data (CRVD) according to respective description data associated with each of said new calendar data and said plurality of existing calendar data.

**5.** The method of any of claims 2 to 4, wherein said calendar database (CD1) is searchable via search data, and said new calendar data and said plurality of existing calendar data are ordered in said countdown reminder view data (CRVD) according to said search data.

**6.** The method of claim 5, further comprising receiving said search data and responsively producing said countdown reminder view data (CRVD).

**7.** The method of any of claims 2 to 6, wherein said countdown reminder view data (CRVD) comprises graphical representation data enabled to control said display device (130) to display a respective graphical representation of each said countdown reminder data and said existing countdown reminder data.

**8.** The method of any of claims 2 to 7, further comprising processing said calendar database (CD1) to produce timeline reminder view data comprising said subset ordered according to a difference in time between a current time and a respective date of each set of calendar data in said subset.

**9.** The method of claim 8, wherein said timeline reminder view further comprises a graphical timeline representation of said subset.

**10.** The method of claim 8, wherein said countdown reminder data and said existing countdown reminder data in said subset comprise a plurality of discrete countdown reminder data, each one of said plurality of discrete countdown reminder data enabled to cause said display device (130) to be controlled to produce said countdown reminder view data (CRVD) on at least one of a respective date and a respective time associated with said one of said plurality of discrete countdown reminder data.

**11.** The method of any preceding claim, wherein said countdown reminder view data (CRVD) comprises graphical representation data enabled to control said display device (130) to display a graphical representation of said countdown reminder data.

**12.** The method of any preceding claim, wherein processing said new calendar data to produce said countdown reminder data comprises determining a difference in time between at least one of said current date and a current time, and said date, and a level of precision of said countdown reminder data is based on said difference, said level of precision becoming higher as said difference becomes smaller.

**13.** A computing device (100) for processing a calendar database (CD1), comprising:
a memory device (110) for storing said calendar database (CD1);
an input device (140) for receiving input data;
a display device (130) for producing a plurality of calendar views; and
a processing unit in communication with said memory device (110), said input device (140) and said display device (130), said processing unit enabled to implement said method of claims 1 to 13.

**14.** A computer readable storage medium containing programming instructions executable on a processor of a computing device having a memory storing a calendar database; said programming instructions causing said computing device to implement the steps of the method according to any one of claims 1 to 12.

**1.** A method for processing a calendar database (CD1) stored at a memory device (110), the method comprising:
creating new calendar data comprising at least a date upon which an event is to occur;
storing said new calendar data in association with countdown reminder flag data in said calendar database (CD1);
processing said calendar database (CD1) to produce countdown reminder view data (CRVD) comprising said new calendar data and countdown reminder data determined by processing said new calendar data and a current date, said countdown reminder view data (CRVD) enabled to control a display device (130) to produce a countdown reminder view comprising said new calendar data and said countdown reminder data, said countdown reminder view being one of a plurality of calendar views that can be produced from said calendar database (CD1);
controlling said display device (130) via said countdown reminder view data (CRVD) to produce said countdown reminder view; and
as a difference between a current and a date of said event becomes smaller, updating said countdown reminder data at said display device (130) to reflect a difference in time between said current date and said date of said event.

**2.** The method of claim 1, wherein said countdown reminder view data (CRVD) further comprises a plurality of existing calendar data stored in said calendar database (CD1), each existing calendar data associated with respective existing countdown reminder flag data, said countdown reminder view data (CRVD) further comprising respective existing countdown reminder data for each of said plurality of existing calendar data.

**3.** The method of claim 2, wherein said countdown reminder view data (CRVD) excludes existing calendar data not associated with a respective existing countdown reminder flag.

**4.** The method of claim 2 or 3, wherein each said existing calendar data comprises at least a respective date upon which a respective planned event is to occur, each said respective date being one of prior to a current date and after said current date.

**5.** The method of claim 2, 3 or 4, wherein said new calendar data and said plurality of existing calendar data are ordered in said countdown reminder view data (CRVD) according to respective description data associated with each of said new calendar data and said plurality of existing calendar data.

**6.** The method of any of claims 2 to 5, wherein said calendar database (CD1) is searchable via search data, and said new calendar data and said plurality of existing calendar data are ordered in said countdown reminder view data (CRVD) according to said search data.

**7.** The method of claim 6, further comprising receiving said search data and responsively producing said countdown reminder view data (CRVD).

**8.** The method of any of claims 2 to 7, wherein said countdown reminder view data (CRVD) comprises graphical representation data enabled to control said display device (130) to display a respective graphical representation of each said countdown reminder data and said existing countdown reminder data.

**9.** The method of any of claims 2 to 8, wherein a subset of said new calendar data and said plurality of existing calendar data are linked and said method further comprises processing said calendar database (CD1) to produce timeline reminder view data comprising said subset ordered according to a difference in time between a current time and a respective date of each set of calendar data in said subset.

**10.** The method of claim 9, wherein said timeline reminder view further comprises a graphical timeline representation of said subset.

**11.** The method of claim 9, wherein said countdown reminder data and said existing countdown reminder data in said subset comprise a plurality of discrete countdown reminder data, each one of said plurality of discrete countdown reminder data enabled to cause said display device (130) to be controlled to produce said countdown reminder view data (CRVD) on at least one of a respective date and a respective time associated with said one of said plurality of discrete countdown reminder data.

**12.** The method of any preceding claim, wherein said countdown reminder view data (CRVD) comprises graphical representation data enabled to control said display device (130) to display a graphical representation of said countdown reminder data.

**13.** The method of any preceding claim, wherein processing said new calendar data to produce said countdown reminder data comprises determining a difference in time between at least one of said current date and a current time, and said date, and a level of precision of said countdown reminder data is based on said difference, said level of precision becoming higher as said difference becomes smaller.

**14.** A computing device (100) for processing a calendar database (CD1), comprising:
a memory device (110) for storing said calendar database (CD1);
an input device (140) for receiving input data;
a display device (130) for producing a plurality of calendar views; and
a processing unit in communication with said memory device (110), said input device (140) and said display device (130), said processing unit enabled to implement said method of claims 1 to 13.

**15.** A computer readable storage medium containing programming instructions executable on a processor of a computing device having a memory storing a calendar database; said programming instructions causing said computing device to implement the steps of the method according to any one of claims 1 to 13.
